# FASCICULE DE BREVET EUROPEEN

(11) **EP 4 305 395 B1**
(45) Date de publication et mention de la délivrance du brevet: **05.11.2025**
(21) Numéro de dépôt: 22704358.5
(22) Date de dépôt: 04.02.2022
(51) Int. Cl.: G01L 1/22, F17C 13/02, G01L 9/04, G01M 5/00

(54) **PROCÉDÉ DE FIXATION D'UN ENSEMBLE COMPORTANT UNE JAUGE DE CONTRAINTE**
VERFAHREN ZUR BEFESTIGUNG EINER ANORDNUNG MIT EINEM DEHNUNGSMESSER
METHOD FOR FASTENING AN ASSEMBLY COMPRISING A STRAIN GAUGE

(30) Priorité: 09.03.2021 FR 2102251
(43) Date de publication de la demande: 17.01.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: SUN, Fangyan, 78000 Versailles (FR); ONDO, Olivier, 75007 Paris (FR)
(74) Mandataire: Air Liquide
(86) Numéro de dépôt international: PCT/EP2022/052682
(87) Numéro de publication internationale: WO 2022/189076

(56) Documents cités:
- WO-A1-2018/219683
- WO-A1-2020/193890
- CA-A1- 3 024 810
- FR-A1- 3 092 897
- US-A- 3 445 800

## Description

La présente invention concerne un procédé de fixation d'un ensemble sur un récipient destiné à contenir un fluide sous pression, l'ensemble comportant un boitier, une carte électronique d'acquisition et une jauge de contrainte, ainsi qu'un dispositif comportant un tel récipient et un tel ensemble.

Une jauge de contrainte est un élément sensible dont la résistance varie lorsqu'elle est déformée. Lorsque la jauge est parfaitement collée à un récipient, tel un récipient de gaz, dont on veut connaître la déformation sous l'effet d'un fluide sous pression qui est contenu dans le récipient (un tel fluide sous pression est à une pression supérieure à la pression atmosphérique), elle se déforme comme le corps du récipient et on peut alors déterminer la déformation du corps du récipient à partir de la déformation de la jauge de contrainte.

Les documents FR 3 016 424, US 2013/139897 et WO 02/066366 ont décrit des jauges de contrainte agencées sur des récipients de gaz, par exemple un réservoir de véhicule ou une bouteille de gaz. D'autres dispositifs sont décrits par les documents WO 2020/193890 A1 et CA 3 024 810 A1. WO 2020/193890, par exemple, divulgue un boîtier comprenant une jauge de contrainte et une électronique associée, l'ensemble étant collé sur bouteille de gaz sous pression.

Cependant, coller une jauge de contrainte est aujourd'hui toujours considéré comme une procédure délicate car la qualité du collage va directement influer sur la qualité de la mesure de déformation. Il s'ensuit que le collage d'une jauge de contrainte doit respecter certaines contraintes notamment quant au choix de la colle et à la procédure de collage de la jauge, en particulier lorsque la jauge doit être collée directement sur le récipient, par exemple un récipient de gaz.

Ainsi, dans le cas d'un récipient de gaz, tel une bouteille ou bonbonne de gaz, la jauge de contrainte doit être directement collée sur le corps du récipient afin que la déformation du corps du récipient puisse être mesurée correctement.

Par ailleurs, il ne s'agit pas seulement de fixer la jauge de contrainte mais plutôt l'ensemble comportant le boitier, la jauge de contrainte ainsi que d'autres composants, tel que pile, carte électronique d'acquisition, de traitement et de transmission éventuelle des données mesurées.

Le problème qui se pose alors est de pouvoir réaliser un collage d'une jauge de contrainte et la fixation du boitier sur un récipient, en particulier un récipient de gaz, et ce, de manière rapide, simple et efficace mais sans toutefois impacter négativement la mesure de déformation opérée par la jauge, et aussi de façon durable (> 10 ans).

On connait du document FR 3 092 897, un procédé de collage d'un ensemble comportant un boitier et une jauge de contrainte qui sont solidaires l'un à l'autre, le collage étant alors réalisé en un seul geste (le boitier et la jauge sont collés à la bouteille en même temps). Un problème existe dans un tel procédé, car le collage correct de la jauge de contrainte n'est pas garanti.

La présente invention vise à remédier efficacement à cet inconvénient en proposant, selon la revendication 1, un procédé de fixation d'un ensemble sur un récipient de gaz destiné à contenir un fluide sous pression, en particulier une bouteille de gaz ou un réservoir de véhicule, l'ensemble comportant un boitier, une carte électronique d'acquisition solidaire du boitier et une jauge de contrainte, le procédé comportant les étapes de :
- fixer la jauge de contrainte au récipient, à l'aide d'un deuxième moyen adhésif, tel qu'une colle, la jauge de contrainte étant fixée au récipient de sorte qu'elle se déforme avec le récipient sous l'effet du gaz sous pression qui est contenu dans le récipient,
- relier électriquement la jauge de contrainte et la carte électronique d'acquisition avec au moins un câble électrique de sorte que le boitier reste libre de se déplacer relativement à la jauge de contrainte,
- fixer le boitier au récipient, à l'aide d'un premier moyen adhésif, de sorte à recouvrir la jauge de contrainte et de sorte à ménager un volume d'air, entre le boitier et la jauge de contrainte et/ou entre la jauge de contrainte et la carte électronique d acquisition, l'étape de fixer le boîtier au récipient étant réalisée après l'étape de fixer la jauge de contrainte au récipient.

Un tel procédé permet une fixation correcte de la jauge de contrainte, sans que le boitier ne puisse interférer sur ladite jauge, pendant ou après ladite fixation et pendant l'utilisation de cette dernière pour mesurer la déformation du récipient sous l'effet du gaz sous pression qui est contenu dans le récipient. Ce type de configuration permet en outre une plus grande liberté entre le boitier (ou la carte électronique d'acquisition) et la jauge de contrainte, pour permettre une fixation correcte de la jauge de contrainte.

L'invention concerne enfin, un dispositif , selon la revendication 8, comportant un récipient de gaz destiné à contenir un fluide sous pression, en particulier une bouteille de gaz ou un réservoir de véhicule, et un ensemble, l'ensemble comportant un boitier, une carte électronique d'acquisition solidaire du boitier et une jauge de contrainte, le boitier étant collé directement à la surface externe du récipient par l'intermédiaire d'un premier moyen adhésif, la jauge de contrainte étant collée directement à la surface externe du récipient au moyen d'un second moyen adhésif comprenant une colle de type méthacrylate, époxy ou cyanoacrylate, ou leurs mélanges, la jauge de contrainte étant fixée au récipient de sorte qu'elle se déforme avec le récipient sous l'effet du gaz sous pression qui est contenu dans le récipient, la carte électronique d'acquisition étant fixée au boitier, la jauge de contrainte étant reliée électriquement à la carte électronique d'acquisition par au moins un câble électrique, le câble électrique ayant une longueur supérieure à la distance entre la carte électronique et la jauge de contrainte, la distance étant celle qui existe lorsque le boitier est collé sur le récipient, un espace libre étant ménagé entre la jauge de contrainte et le boitier et/ou entre la jauge de contrainte et la carte électronique d'acquisition, de sorte que ni la carte électronique d'acquisition ni le boitier n'exerce un effort sur la jauge de contrainte.

L'invention sera mieux comprise à la lecture de la description qui suit et à l'examen des figures qui l'accompagnent. Ces figures ne sont données qu'à titre illustratif mais nullement limitatif de l'invention.
[Fig.1] La [Fig.1] est une représentation schématique d'un ensemble selon l'invention, avant fixation sur un récipient ;
[Fig.2] La [Fig.2] est une représentation schématique d'un récipient sur lequel on a fixé la jauge de contrainte de l'ensemble de la [Fig.1] ;
[Fig.3] La [Fig.3] est une représentation du récipient de la [Fig.2] sur laquelle l'ensemble est fixé.

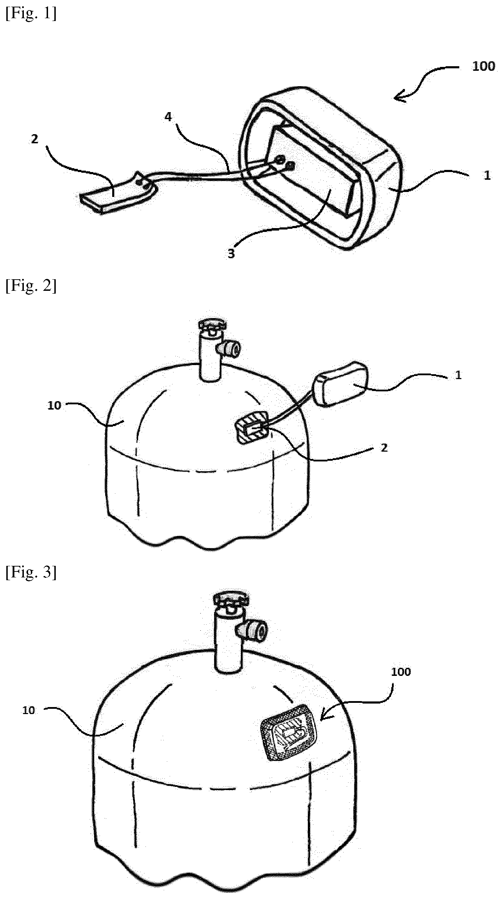

En référence à la [Fig.1], on a représenté un ensemble 100 comportant un boitier 1, une carte électronique d'acquisition 3 et une jauge de contrainte 2. La jauge de contrainte 2 est reliée à la carte électronique d'acquisition 3 par l'intermédiaire d'un câble électrique 4.

En référence à la [Fig.2], on a représenté une étape d'un procédé de fixation de l'ensemble 100 sur un récipient 10 destiné à contenir un fluide sous pression. Lors de cette étape, on a fixé la jauge de contrainte 2 à la paroi du récipient 10, à l'aide d'un deuxième moyen adhésif, tel qu'une colle, le boitier 1 étant libre de se déplacer relativement à la jauge de contrainte 2.

Dans l'exemple de la [Fig.2], le boitier 1 est libre par rapport à la jauge de contrainte 2 car il est relié à cette dernières par le câble électrique 4 ce qui lui permet un degré de déplacement relatif à la jauge de contrainte 2.

Ainsi, lors de l'étape de fixation de la jauge de contrainte 2, le boitier 1 n'a aucune incidence sur la qualité de la fixation de cette dernière.

En référence à la [Fig.3], on a représenté le récipient 10 alors qu'on a effectué l'étape de fixation du boitier 1 au récipient 10, à l'aide d'un premier moyen adhésif, de sorte à recouvrir la jauge de contrainte 2.

Dans l'exemple de la [Fig.3], le câble électrique 4 est aussi recouvert par le boitier 1. Ainsi, après la fixation de l'ensemble 100 sur le récipient 10, le boitier 1 n'exerce aucun effort sur la jauge de contrainte 2, ce qui permet de garantir un fonctionnement correct et précis de la jauge de contrainte 2. Une fois le boitier 1 fixé au récipient 10, la jauge de contrainte 2 est entourée par de l'air qui se trouve emprisonné dans un espace interne, entre le boitier et le récipient 10. Si le boitier 1 n'est pas fixé de manière totalement étanche, l'espace interne peut se retrouver en communication fluidique avec l'environnement dans lequel se trouve le récipient.

L'espace interne peut être rempli au moins partiellement par un gaz autre que de l'air ambiant et le boitier 1 peut être fixé de manière étanche par rapport au récipient 10.

Dans l'exemple représenté, le récipient 10 est une bouteille de gaz. Ainsi, la détermination de la déformation de la paroi de la bouteille de gaz 10 permet ensuite, après traitement des valeurs de déformation mesurées, de déterminer le niveau de remplissage de la bouteille, c'est-à-dire la quantité de gaz qu'elle contient.

Pour cela, la jauge de contrainte 2 doit être soumise à un champ de déformation identique à celui exercée par la pression de gaz sur la paroi externe de la bouteille de gaz 10. La jauge 2 doit donc être solidaire de la paroi externe de la bouteille de gaz 10.

La jauge de contrainte 2 est, par ailleurs, reliée électriquement à la carte électronique d'acquisition 3.

La carte électronique d'acquisition 3, telle une carte électronique à microprocesseur, est montée solidaire du boitier 1.

Elle comporte des moyens de traitement de données, permettant de traiter les mesures de déformation opérées par la jauge de contrainte 2. Elle comporte en outre des moyens de transmission de données à distance.

Le boitier 1 sert de carcasse protectrice. Il comporte une (ou plusieurs) pile(s) électrique(s).

La pile fournit du courant électrique à la jauge de contrainte 2, aux moyens de traitement de données, aux moyens de transmission de données, et éventuellement à d'autres composants qui en en besoin pour fonctionner.

À titre d'exemple, le second moyen adhésif est disposé directement entre la jauge de contrainte 2 et la bouteille 10. Il a préférentiellement :
- une température de transition vitreuse Tg la plus élevée possible (> 80°C) pour ne pas altérer la mesure par la jauge 2 de la déformation de la bouteille 10,
- une élongation entre 2 et 7%, c'est-à-dire proche des valeurs de déformation que l'on veut mesurer,
- une réticulation à température ambiante (typiquement à environ 20°C) afin de ne pas avoir à chauffer le boitier 1 lors de la procédure de fixation,
- un coefficient de dilatation thermique (proche de l'acier) pour limiter les contraintes en cisaillement sur la jauge lors de variation de la température ambiante,
- une résistance élevée au vieillissement à chaud et aux produits chimiques,
- et/ou une faible viscosité pour assurer un collage homogène en couche fine.

Pour répondre à ces contraintes, les colles de type méthacrylate, époxy et cyanoacrylate, ou des mélanges de ces colles, peuvent convenir en tant que second moyen adhésif.

Par ailleurs, concernant le premier moyen adhésif servant à fixer le boitier 1, lequel comprend un support adhésif aplati, telle un ruban ou une bande, dont les deux surfaces opposées sur recouvertes d'une ou plusieurs colles, avantageusement un ruban adhésif à double face adhésive, il peut porter une (ou des) même colle sur ses deux surfaces opposées ou, selon le cas, des colles différentes.

Cette ou ces colles peuvent aussi être de type méthacrylate, époxy et cyanoacrylate, ou leurs mélanges. Toutefois, il faut souligner que la (les) colle est choisie dans ce cas pour permettre une prise (i.e. collage) rapide, c'est-à-dire (quasi) instantané au moment de la mise en place du boitier 1 contre la surface de la bouteille 10, et préférentiellement assurer une étanchéité en protégeant alors la jauge de contrainte 2.

Avantageusement, on choisit en tant que premier moyen adhésif, un support adhésif aplati ayant une épaisseur de l'ordre de 0.1 à 2 mm, de préférence formé d'un matériau légèrement déformable (la déformabilité du support permettant une meilleure conformation sur des surfaces non plane), de type mousse synthétique (par exemple acrylique, PE, PET, ...), typiquement un ruban adhésif double face ou analogue.

Le premier moyen adhésif pourra répondre au moins à l'une des contraintes suivantes :
- un temps de prise (i.e. collage) le plus court possible (i.e. <1 minute, voire < 10 sec) afin de maintenir immédiatement l'ensemble en place sur la bouteille,
- être étanche afin de protéger la jauge de contrainte 2 contre l'humidité,
- bonne tenue aux vibrations et aux chocs,
- bonne résistance à des températures fluctuant entre -40°C et 50°C, et/ou
- bonne tenue dans le temps (i.e. > 5 ans).

A titre d'exemple, le support peut comprendre une mousse synthétique un peu épaisse, c'est-à-dire d'au moins 0.8 mm d'épaisseur, afin de s'adapter à une variété de rayons de courbure de bouteilles 10.

Avantageusement, afin d'obtenir une fixation efficace de l'ensemble 100, notamment de la jauge de contrainte 2, on peut réaliser au moins l'une des étapes suivantes :
- ponçage de la zone de la bouteille 10 où l'ensemble 100 doit être fixé,
- dégraissage/nettoyage de la zone de la bouteille 10, après ponçage,

En variante, le premier moyen adhésif est identique au deuxième moyen adhésif, à savoir par exemple une colle, notamment une colle de type méthacrylate, époxy ou cyanoacrylate, ou leurs mélanges.

## Revendications

1. Procédé de fixation d'un ensemble (100) sur un récipient de gaz (10) destiné à contenir un fluide sous pression, en particulier une bouteille de gaz (10) ou un réservoir de véhicule, l'ensemble (100) comportant un boitier (1), une carte électronique d'acquisition (3) solidaire du boitier (1) et une jauge de contrainte (2), le procédé comportant les étapes de :
- fixer la jauge de contrainte (2) au récipient (10), à l'aide d'un deuxième moyen adhésif, tel qu'une colle, la jauge de contrainte (2) étant fixée au récipient (10) de sorte qu'elle se déforme avec le récipient (10) sous l'effet du gaz sous pression qui est contenu dans le récipient (10),
- relier électriquement la jauge de contrainte (2) et la carte électronique d'acquisition (3) avec au moins un câble électrique (4) de sorte que le boitier (1) reste libre de se déplacer relativement à la jauge de contrainte (2),
- fixer le boitier (1) au récipient (10), à l'aide d'un premier moyen adhésif, de sorte à recouvrir la jauge de contrainte (2) et de sorte à ménager un volume d'air, entre le boitier (1) et la jauge de contrainte (2) et/ou entre la jauge de contrainte (2) et la carte électronique d'acquisition (3), l'étape de fixer le boitier au récipient étant réalisée après l'étape de fixer la jauge de contrainte au récipient.

2. Procédé selon la revendication précédente, l'étape de fixer le boitier (1) étant réalisée de sorte que le boitier (1) et/ou la carte électronique (3) n'exerce aucun effort sur la jauge de contrainte (2).

3. Procédé selon la revendication précédente, le deuxième moyen adhésif comprenant une colle de type méthacrylate, époxy ou cyanoacrylate, ou leurs mélanges.

4. Procédé selon l'une des revendications précédentes, le premier moyen adhésif comprenant un support adhésif comprenant deux surfaces opposées sur lesquelles sont déposées une ou des colles, de préférence le support adhésif comprenant un ruban adhésif à double face adhésive.

5. Procédé selon l'une des revendications précédentes, le premier moyen adhésif étant positionné sur une face inférieure du boitier (1) la face inférieure étant agencée pour épouser la surface externe du récipient (10) lorsque le boitier (1) est fixé au récipient (10).

6. Procédé selon l'une des revendications précédentes, le deuxième moyen adhésif étant déposé directement sur la jauge de contrainte (2).

7. Procédé selon l'une des revendications précédentes, le câble électrique (4) étant soudé ou relié par un connecteur à la jauge de contrainte (2) et à la carte électronique d'acquisition (3).

8. Dispositif comportant un récipient de gaz (10) destiné à contenir un fluide sous pression, en particulier une bouteille de gaz (10) ou un réservoir de véhicule, et un ensemble (100), l'ensemble (100) comportant un boitier (1), une carte électronique d'acquisition (3) solidaire du boitier (1) et une jauge de contrainte (2), le boitier (1) étant collé directement à la surface externe du récipient (10) par l'intermédiaire d'un premier moyen adhésif, la jauge de contrainte (2) étant collée directement à la surface externe du récipient (10) au moyen d'un second moyen adhésif comprenant une colle de type méthacrylate, époxy ou cyanoacrylate, ou leurs mélanges, la jauge de contrainte (2) étant fixée au récipient (10) de sorte qu'elle se déforme avec le récipient (10) sous l'effet du gaz sous pression qui est contenu dans le récipient (10), la carte électronique d'acquisition (3) étant fixée au boitier (1), la jauge de contrainte (2) étant reliée électriquement à la carte électronique d'acquisition (3) par au moins un câble électrique (4), le câble électrique (4) ayant une longueur supérieure à la distance entre la carte électronique (3) et la jauge de contrainte (2), la distance étant celle qui existe lorsque le boitier est collé sur le récipient, un espace libre étant ménagé entre la jauge de contrainte (2) et le boitier (1) et/ou entre la jauge de contrainte (2) et la carte électronique d'acquisition (3), de sorte que ni la carte électronique d'acquisition (3) ni le boitier (1) n'exerce un effort sur la jauge de contrainte (2).

## Patentansprüche

1. Verfahren zur Befestigung einer Anordnung (100) an einem Gasbehälter (10), der dazu bestimmt ist, ein unter Druck stehendes Fluid zu enthalten, insbesondere eine Gasflasche (10) oder einen Fahrzeugtank, wobei die Anordnung (100) ein Gehäuse (1), eine mit dem Gehäuse (1) fest verbundene elektronische Erfassungskarte (3) und einen Dehnungsmessstreifen (2) umfasst, wobei das Verfahren die folgenden Schritte umfasst:
- Befestigen des Dehnungsmessstreifens (2) am Behälter (10) mithilfe eines zweiten Haftmittels, wie z. B. eines Klebstoffs, wobei der Dehnungsmessstreifen (2) so am Behälter (10) befestigt wird, dass er sich mit dem Behälter (10) unter der Wirkung des im Behälter (10) enthaltenen unter Druck stehenden Gases verformt,
- elektrisches Verbinden des Dehnungsmessstreifens (2) und der elektronischen Erfassungskarte (3) mit mindestens einem elektrischen Kabel (4), so dass das Gehäuse (1) relativ zum Dehnungsmessstreifen (2) frei beweglich bleibt,
- Befestigen des Gehäuses (1) am Behälter (10) mithilfe eines ersten Haftmittels, um den Dehnungsmessstreifen (2) zu bedecken und um ein Luftvolumen zwischen dem Gehäuse (1) und dem Dehnungsmessstreifen (2) und/oder zwischen dem Dehnungsmessstreifen (2) und der elektronischen Erfassungskarte (3) zu schaffen, wobei der Schritt des Befestigens des Gehäuses am Behälter nach dem Schritt des Befestigens des Dehnungsmessstreifens am Behälter durchgeführt wird.

2. Verfahren nach dem vorhergehenden Anspruch, wobei der Schritt des Befestigens des Gehäuses (1) so durchgeführt wird, dass das Gehäuse (1) und/oder die elektronische Karte (3) keine Kraft auf den Dehnungsmessstreifen (2) ausübt.

3. Verfahren nach dem vorhergehenden Anspruch, wobei das zweite Haftmittel einen Klebstoff vom Typ Methacrylat, Epoxid oder Cyanacrylat oder deren Mischungen umfasst.

4. Verfahren nach einem der vorhergehenden Ansprüche, wobei das erste Haftmittel einen Haftträger umfasst, der zwei gegenüberliegende Oberflächen aufweist, auf denen ein oder mehrere Klebstoffe aufgetragen sind, wobei der Haftträger vorzugsweise ein doppelseitiges Klebeband umfasst.

5. Verfahren nach einem der vorhergehenden Ansprüche, wobei das erste Haftmittel auf einer Unterseite des Gehäuses (1) positioniert ist, wobei die Unterseite so angeordnet ist, dass sie sich an die Außenfläche des Behälters (10) anpasst, wenn das Gehäuse (1) am Behälter (10) befestigt wird.

6. Verfahren nach einem der vorhergehenden Ansprüche, wobei das zweite Haftmittel direkt auf den Dehnungsmessstreifen (2) aufgetragen wird.

7. Verfahren nach einem der vorhergehenden Ansprüche, wobei das elektrische Kabel (4) an den Dehnungsmessstreifen (2) und an die elektronische Erfassungskarte (3) gelötet oder durch einen Verbinder angeschlossen ist.

8. Vorrichtung, umfassend einen Gasbehälter (10), der dazu bestimmt ist, ein unter Druck stehendes Fluid zu enthalten, insbesondere eine Gasflasche (10) oder einen Fahrzeugtank, und eine Anordnung (100), wobei die Anordnung (100) ein Gehäuse (1), eine mit dem Gehäuse (1) fest verbundene elektronische Erfassungskarte (3) und einen Dehnungsmessstreifen (2) umfasst, wobei das Gehäuse (1) mittels eines ersten Haftmittels direkt auf die Außenfläche des Behälters (10) geklebt ist, der Dehnungsmessstreifen (2) mittels eines zweiten Haftmittels, das einen Klebstoff vom Typ Methacrylat, Epoxid oder Cyanacrylat oder deren Mischungen umfasst, direkt auf die Außenfläche des Behälters (10) geklebt ist, der Dehnungsmessstreifen (2) so an dem Behälter (10) befestigt ist, dass er sich mit dem Behälter (10) unter der Wirkung des im Behälter (10) enthaltenen unter Druck stehenden Gases verformt, die elektronische Erfassungskarte (3) am Gehäuse (1) befestigt ist, der Dehnungsmessstreifen (2) durch mindestens ein elektrisches Kabel (4) elektrisch mit der elektronischen Erfassungskarte (3) verbunden ist, das elektrische Kabel (4) eine Länge aufweist, die größer ist als der Abstand zwischen der elektronischen Karte (3) und dem Dehnungsmessstreifen (2), wobei der Abstand derjenige ist, der besteht, wenn das Gehäuse auf den Behälter geklebt ist, ein freier Raum zwischen dem Dehnungsmessstreifen (2) und dem Gehäuse (1) und/oder zwischen dem Dehnungsmessstreifen (2) und der elektronischen Erfassungskarte (3) vorgesehen ist, sodass weder die elektronische Erfassungskarte (3) noch das Gehäuse (1) eine Kraft auf den Dehnungsmessstreifen (2) ausübt.

## Claims

1. A method for fixing an assembly (100) onto a gas container (10) intended to contain a fluid under pressure, in particular a gas bottle (10) or a vehicle tank, the assembly (100) comprising a housing (1), an acquisition electronic card (3) integral with the housing (1) and a strain gauge (2), the method comprising the steps of:
- fixing the strain gauge (2) to the container (10), using a second adhesive means, such as a glue, the strain gauge (2) being fixed to the container (10) such that it deforms with the container (10) under the effect of the pressurized gas that is contained in the container (10),
- electrically connecting the strain gauge (2) and the acquisition electronic card (3) with at least one electric cable (4) such that the housing (1) remains free to move relative to the strain gauge (2),
- fixing the housing (1) to the container (10), using a first adhesive means, so as to cover the strain gauge (2) and so as to provide a volume of air between the housing (1) and the strain gauge (2) and/or between the strain gauge (2) and the acquisition electronic card (3), the step of fixing the housing to the container being performed after the step of fixing the strain gauge to the container.

2. The method according to the preceding claim, wherein the step of fixing the housing (1) is performed such that the housing (1) and/or the electronic card (3) exerts no force on the strain gauge (2).

3. The method according to the preceding claim, wherein the second adhesive means comprises a glue of the methacrylate, epoxy or cyanoacrylate type, or mixtures thereof.

4. The method according to any one of the preceding claims, wherein the first adhesive means comprises an adhesive support comprising two opposite surfaces on which one or more glues are deposited, preferably the adhesive support comprising a double-sided adhesive tape.

5. The method according to any one of the preceding claims, wherein the first adhesive means is positioned on a lower face of the housing (1), the lower face being arranged to match the external surface of the container (10) when the housing (1) is fixed to the container (10).

6. The method according to any one of the preceding claims, wherein the second adhesive means is deposited directly on the strain gauge (2).

7. The method according to any one of the preceding claims, wherein the electric cable (4) is welded or connected by a connector to the strain gauge (2) and to the acquisition electronic card (3).

8. A device comprising a gas container (10) intended to contain a fluid under pressure, in particular a gas bottle (10) or a vehicle tank, and an assembly (100), the assembly (100) comprising a housing (1), an acquisition electronic card (3) integral with the housing (1) and a strain gauge (2), the housing (1) being glued directly to the external surface of the container (10) via a first adhesive means, the strain gauge (2) being glued directly to the external surface of the container (10) by means of a second adhesive means comprising a glue of the methacrylate, epoxy or cyanoacrylate type, or mixtures thereof, the strain gauge (2) being fixed to the container (10) such that it deforms with the container (10) under the effect of the pressurized gas that is contained in the container (10), the acquisition electronic card (3) being fixed to the housing (1), the strain gauge (2) being electrically connected to the acquisition electronic card (3) by at least one electric cable (4), the electric cable (4) having a length greater than the distance between the electronic card (3) and the strain gauge (2), the distance being that which exists when the housing is glued onto the container, a free space being provided between the strain gauge (2) and the housing (1) and/or between the strain gauge (2) and the acquisition electronic card (3), such that neither the acquisition electronic card (3) nor the housing (1) exerts a force on the strain gauge (2).
